# EUROPEAN PATENT APPLICATION

(11) **EP 2 164 206 A1**
(43) Date of publication of application: **17.03.2010**
(21) Application number: 07855911.9
(22) Date of filing: 29.12.2007
(51) Int. Cl.: H04L 12/56

(54) **METHOD FOR INFORMING HOME SUBSCRIBER SERVER OF STORING PACKET DATA NETWORK GATEWAY ADDRESS INFORMATION**

(30) Priority: 22.06.2007 CN 200710123429
(71) Applicant: ZTE Corporation, Shenzhen, Guangdong 518057 (CN)
(72) Inventor: ZHU, Jinguo, Guangdong 518057 (CN); ZONG, Zaifeng, Guangdong 518057 (CN); FANG, Min, Guangdong 518057 (CN); LIU, Xiliang, Guangdong 518057 (CN)
(74) Representative: Rekdal, Kristine
(86) International application number: PCT/CN2007/003911
(87) International publication number: WO 2009/000125

(57) **Abstract**

The present invention discloses a method for informing Home Subscriber Server (HSS) of Packet Data Network Gateway (PDN GW) address information to be stored in the HSS in the System Architecture Evolution. The method comprises: the Mobility Management Node acquires that the PDN GW address information is not stored in the HSS, or the Mobility Management Node selects another PDN GW; the Mobility Management Node informs the HSS of the PDN GW address information to store. According to the present invention, the HSS can obtain the PDN GW address information directly from the MME without the help of the 3GPP AAA Server and the roaming interface between the PDN GW and the HSS.

## Description

### Technical Field

The present invention relates to the radio communication field, and more particularly, to a method for informing home subscriber server (HSS) of packet data network gateway (PDN GW) address information to be stored in the HSS.

### Background of the Related Art

With the Wimax (World Interoperability for Microwave Access) developing quickly as a new force, the 3^{rd} Generation Mobile Communication System has to improve its network performance and reduce the cost of network construction and operation in order to keep its powerful competitiveness in the field of mobile communication. Therefore, the workgroup on standardization of 3GPP (3^{rd} Generation Partnership Project) is now working on evolving PS Core (Packet Switch Core) and UTRAN (Universal Mobile Telecommunication System Radio Access Network), the research subject is called System Architecture Evolution (SAE) and its target is to make the evolved PS Core (E-PS Core) provide higher transmission speed, shorter transmission delay and optimal packet and support mobility management among E-UTRAN (Evolved UTRAN), UTRAN, WLAN (Wireless Local Area Network) and other non 3GPP access networks.

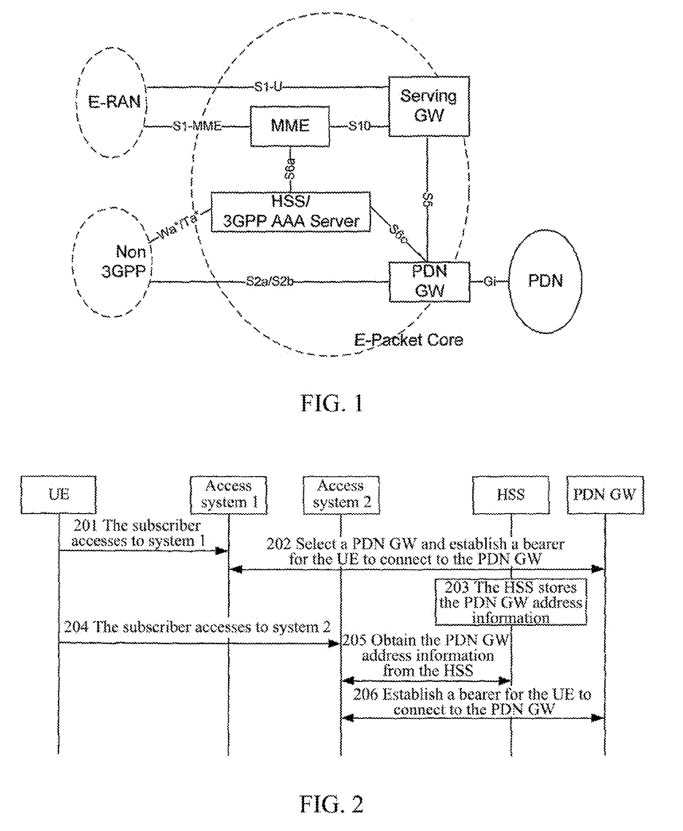

The present architecture of the SAE is shown in FIG. 1, which comprises the following network elements:

E-RAN (Evolved Radio Access Network), which could provide higher upstream and downstream rates, shorter transmission delay and more reliable radio transmission. The network element included in E-RAN is eNodeB (Evolved NodeB) which provides radio resource for the subscriber access.

Non 3GPP, which means applying the radio technologies not defined in 3GPP, such as the WLAN (Wireless Local Area Network), Wimax (World Interoperability for Microwave Access), and so on. The non 3GPP networks are mainly classified into the believable and the unbelievable which access to the PDN GW through S2a and S2b respectively.

PDN (Packet Data Network), which is used to provide services for the subscribers.

E-Packet Core (Evolved Packet Core), which is used to offer shorter delay and allow the access of more radio access systems and comprises the following network elements:

HSS (Home Subscriber Server), which is used to permanently store the subscribers' contract data and offer the authentication for the subscribers.

3GPP AAA (Authentication Authorization Accounting) Server, which is mainly used to offer the authentication, authorization and accounting when the non 3GPP radio network accesses to the 3GPP network; the 3GPP AAA Server might be integrated with or separated from the HSS, and when they are separated, they communicate through the Wx* interface; the interfaces between the 3GPP AAA Server and the Non 3GPP are the Wa* and Ta*; when roaming, the non 3GPP network at the visiting place should access to the 3GPP AAA Server at the home place via the 3GPP AAA Proxy, and the interface between the 3GPP AAA Proxy and the 3GPP AAA Server is the Wd*;

MME (Mobility Management Entity), which is a control plane functional entity, serving as a server for temporarily storing the subscribers' data, responsible for managing and storing the UE (User Equipment) context (such as the UE/subscriber's identifier, status of mobility management and parameters of subscribers' security), assigning temporary identifiers for the subscribers, processing all non-access-layer messages between the MME and UE when the UE resides in the tracking area or the network is responsible for authenticating the subscribers, and triggering the paging in the SAE. The interface between the eNodeB and the MME is the S1-MME;

Serving GW (Serving Gateway), which is a subscriber plane entity responsible for routing the subscriber plane's data and terminating the downstream data of the UE in idle state, managing and storing the UE's SAE bearer context, such as parameters of the IP bearer service and route information within the network, and so on, and it is the anchor point of the subscriber plane within the 3GPP system, and each subscriber can only have one Serving GW at one moment; the interface between the eNodeB and the Serving GW is S1-U, and the MME controls the Serving GW through the interface S10;

PDN GW (Packet Data Network Gateway), which is the gateway for the UE to access to PDN and is the mobility anchor point for 3GPP and non-3GPP to access to systems; the interface between the PDN GW and the Serving GW is S5, that between the PDN GW and the 3GPP AAA Server is S6c, and that between the PDN GW and the PDN is the Gi.

Maintaining the continuity of services during the handover means that a subscriber can continuously use the service during moving, which requires that the subscriber's IP address should not be changed during the moving with respect to the services, meanwhile, the PDN GW which accesses to the service network should not be changed either. One method is that, when a subscriber selects a PDN GW in one access system, he/she sends the IP address of the selected PDN GW to the HSS to store; therefore, when he/she hands over to another access system, the address of the PDN GW can be acquired from the HSS since the HSS is the same. As shown in FIG. 2:
S201, the UE accesses to the access system 1;
S202, the access system 1 selects one PDN GW and establishes a bearer for the UE to connect to the PDN GW;
S203, store the PDN GW address in the HSS;
S204, the UE accesses to the access system 2 when the UE hands over to the access system 2;
S5205, the access system 2 acquires the PDN GW address information from the HSS;
S206, the access system 2 establishes a bearer for the UE to connect to the PDN GW

When the UE accesses in a non-3GPP, the PDN GW sends its IP address information to the HSS via the AAA Server.

However, in a 3GPP access system, for example, the access of the E-RAN or the GPRS (General Packet Radio Service) does not via AAA Server, thus this method is not suitable.

Another method is that, the PDN GW directly tells its IP address to the HSS, thus during the roaming, the interface between the PDN GW in the visiting network and the HSS in the home network is a roaming interface, and the operators need to sign the roaming protocol.

### Summary of the Invention

The present invention offers a method for informing the HSS of the PDN GW address information to be stored in the HSS, without the help of the AAA Server and the roaming interface between the PDN GW and the HSS.

In order to solve the above technical problem, the present invention provides a method for informing the HSS of the PDN GW address information to be stored in the HSS in the SAE, the method comprises the following steps of:
(1) a mobility management node (MMN) acquiring that PDN GW address information is not stored in the HSS, or the MMN selecting another PDN GW;
(2) The MMN informing the HSS of the PDN GW address information to be stored in the HSS.

Furthermore, said MMN is the mobility management entity (MME) or the serving GPRS supporting node (SGSN).

Furthermore, in said step (1), said MMN acquires that there is no the PDN GW address information in the HSS during the process of the HSS inserting subscriber data into the MMN, or acquires the PDN GW address information stored in the HSS.Furthermore, before said HSS inserts the subscriber data into the MMN, the MMN sends a location update request to the HSS to update subscriber's location information stored in the HSS and acquire the subscriber data from the HSS.

Furthermore, in said step (2):

The MMN informs the HSS of the PDN GW address information to be stored in HSS via location update information.

Furthermore, after said HSS stores the updated PDN GW address information, it returns a location update response to the MME.

The present invention points out that, in the 3GPP access system, the MME or SGSN (serving GPRS supporting node) informs the HSS of the PDN GW address information to be stored in the HSS, which avoids using the AAA Server and the roaming interface between the PDN GW and the HSS on the one hand; and on the other hand, the MME or the SGSN can determine whether the HSS has stored the PDN GW's address information, and it does not need to inform the HSS again if yes.

### Brief Description of Drawings

FIG. 1 is a schematic of the handover between different access systems in the prior art;
FIG. 2 is a schematic of the direct handover between different access systems;
FIG. 3 is a schematic of the flow chart in accordance with an embodiment of the present invention;
FIG. 4 is a flow chart of attaching in accordance with an example of the present invention.

### Preferred Embodiments of the Present Invention

The technical scheme of the present invention will be described in further detail in conjunction with the accompanying figures and embodiments.

The present invention solves the problem of how to inform the HSS about the PDN GW address information. The core idea of the present invention is that, when there is a need to store PDN GW address information in the HSS, the MMN sends the PDN GW address information to the HSS to store. The need to store PDN GW address information in the HSS means that: the PDN GW address information is not stored in the HSS, or the MMN selects another PDN GW

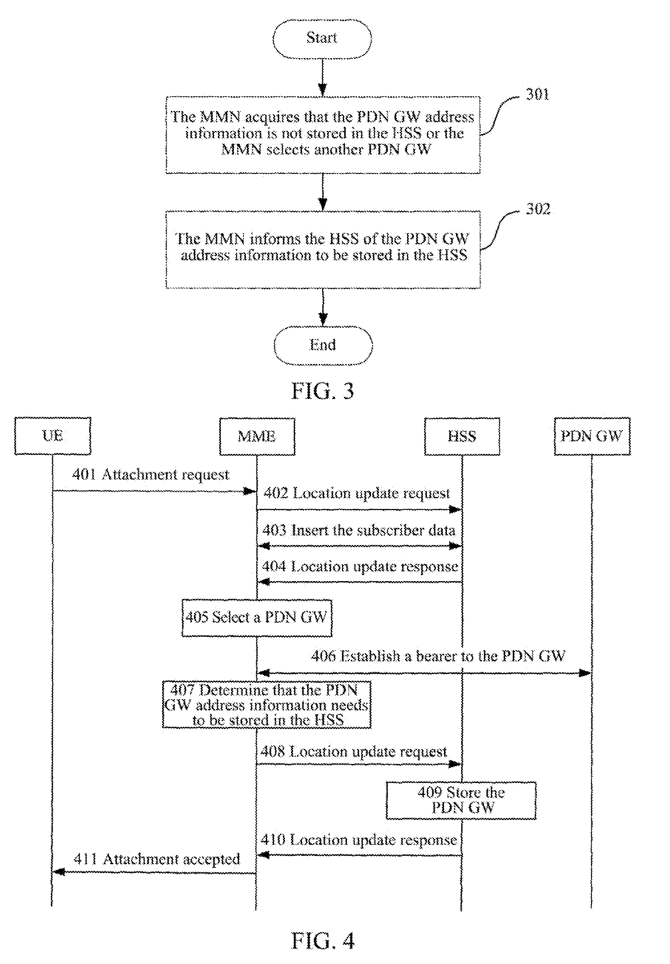

As shown in FIG. 3, an embodiment of the present invention comprises the following steps:
S301, the MMN acquires that the PDN GW address information is not stored in the HSS or the MMN selects another PDN GW;
S302, the MMN informs the HSS of the PDN GW address information to be stored in the HSS.

Said MMN may be the MME in the E-RAN access or the SGSN in the GPRS access.

In said S302, the MMN informs the HSS of the PDN GW address information to be stored in the HSS via the notification message which needs to have the parameter of the PDN GW address information.

In said S302, said notification message might be the location update message already existed between the MME/SGSN and the HSS.

During the process of the HSS inserting the subscriber data into the MMN, said MMN acquires the PDN GW address information stored in the HSS, or acquires that the PDN GW address information is not stored in the HSS.

FIG 4 is a flow chart of the attachment in accordance with an example of the present invention, and it comprises the following steps:
S401, the UE sends the attachment request in the E-RAN which forwards the request to the MME;
S402, the MME sends the location update request to the HSS to update the subscriber location information stored in the HSS and acquire the subscriber data from the HSS;
S403, the HSS inserts the subscriber data into the MME, and during the process, the MME can determine whether the PDN GW location information, i.e. the address information is stored in the HSS;
S404, after successfully inserting the subscriber data, the HSS returns the location update response to the MME;
S405, the MME selects one PDN GW according to the information offered by the HSS, and if the HSS has stored the PDN GW, the MME can directly use this PDN GW or select another one to use; when it does not store the PDN GW, the MME selects one PDN GW to use.
S406, the MME establishes a bearer to the PDN GW to be used;
S407, if the HSS has not stored the PDN GW address information or the MME has selected another PDN GW, it determines that it needs to store the PDN GW address information into the HSS, proceed to S408, and otherwise proceed to S411;
S408, the MME sends the location update request to the HSS, and the request contains the new PDN GW location information;
S409, the HSS stores the PDN GW address information;
S410, the HSS returns the location update response to the MME;
S411, the MME returns the attachment accepted message to the UE.

For simplification, the processes of unrelated authorization and encryption are omitted in this embodiment, and when the UE accesses in the GPRS, the MME is replaced by the SGSN.

To sum up, according to the present invention, the HSS can directly acquire the PDN GW address information from the MME without the help of the 3GPP AAA Server, and thus a roaming interface is not needed between the PDN GW and the HSS.

The above description is an embodiment of the present invention, not used to limit the present invention, and for those stilled in the field, the present invention may have various modification and variations, and without departing from the spirit and essence of the present invention, all kinds of modification or variations should belong to the scope of the claims of the present invention.

### Industrial Applicability

The technical scheme of the present invention can make the HSS store the PDN GW address information without using the AAA Server or the roaming interface between the PDN GW and the HSS.

## Claims

1. A method for informing a home subscriber server (HSS) of packet data network gateway (PDN GW) address information to be stored in the HSS in system architecture evolution, comprising the following steps of:
(1) a mobility management node (MMN) acquiring that PDN GW address information is not stored in the HSS, or the MMN selecting another PDN GW; and
(2) the MMN informing the HSS of the PDN GW address information to be stored in the HSS.

2. A method of claim 1, wherein:
said MMN is a mobility management entity (MME) or a serving GPRS supporting node (SGSN).

3. A method of claim 1 or 2, wherein:
in said step (1), during a process of the HSS inserting subscriber data into the MMN, said MMN acquires that the PDN GW address information is not stored in the HSS, or acquires the PDN GW address information stored in the HSS.

4. A method of claim 3, further comprising:
before said HSS inserts the subscriber data into the MMN, the MMN sending a location update request to the HSS to update subscriber location information stored in the HSS and acquiring the subscriber data from the HSS.

5. A method of claim 1 or 2, wherein in said step (2):
the MMN informs the HSS of the PDN GW address information to be stored in the HSS via a location update message.

6. A method of claim 5, further comprising:
after said HSS stores the updated PDN GW address information, said HSS returning a location update response to the MMN.
